(19) Europäisches Patentamt

European Patent Office

Office européen des brevets

(11) EP 0 588 239 B1

(12) EUROPÄISCHE PATENTSCHRIFT

(45) Veröffentlichungstag und Bekanntmachung des Hinweises auf die Patenterteilung:
06.12.2000 Patentblatt 2000/49

(51) Int. Cl.⁷: C09C 3/04, D21H 21/52, C09D 11/02, C09D 7/12

(21) Anmeldenummer: 93114495.0

(22) Anmeldetag: 09.09.1993

(54) **Verfahren zur Herstellung von Füllstoff- und/oder Pigmentsuspensionen insbesondere für die Papierindustrie**

Process for preparing pigment and/or filler suspensions especially for the papermaking industry

Procédé de préparation de suspensions de charges et/ou pigments, en particulier pour l'industrie papetière

(84) Benannte Vertragsstaaten:
**AT BE DE FR GB**

(30) Priorität: **14.09.1992 DE 4230742**

(43) Veröffentlichungstag der Anmeldung:
**23.03.1994  Patentblatt 1994/12**

(73) Patentinhaber: **Plüss-Staufer AG**
**4665 Oftringen (CH)**

(72) Erfinder:
• **Strauch, Dieter**
**CH-4800 Zofingen (CH)**
• **Arnold, Manfred**
**CH-4665 Oftringen (CH)**

(74) Vertreter:
**Reinhard - Skuhra - Weise & Partner**
**Friedrichstrasse 31**
**80801 München (DE)**

(56) Entgegenhaltungen:
EP-A- 0 027 997          GB-A- 2 139 606
US-A- 4 013 602          US-A- 4 793 985
US-A- 5 275 650

• **DATABASE PAPERCHEM THE INSTITUTE OF PAPER SCIENCE AND TECHNOLOGY, ATLANTA, GA, US AN 48-05960 PRICE, C. R. 'ROLE OF PARTICLE SIZE DISTRIBUTION IN THE BEHAVIOR OF COATING CLAYS' & SOUTHERN PULP PAPER MFR. 40, NO. 7: 13-14, 16-17 (JULY 1977).**

**Beschreibung**

Die Erfindung betrifft ein Verfahren zur Herstellung von Pigmentsuspensionen für die Papierindustrie und deren Verwendung für die Papierindustrie.

In der DE-PS 29 43 652 wird ein mineralischer Füllstoff in Form von natürlichem Calciumcarbonat beschrieben, welcher für verschiedene Anwendungen, wie Glanzfarben, gestrichene Papiere und Kunststoffe einsetzbar ist. Durch die beschriebene Korngrößenverteilung der darin verwendeten Füllstoffteilchen konnten verbesserte Eigenschaften bei glänzenden Oberflächen beim Einsatz in Farben und Streichpapieren erhalten werden.

In der DE-PS 33 16 949 wird ein durch Vermahlen und/oder Klassifizierung nach Teilchengröße aufbereitetes Calciumcarbonat angegeben, welches im wesentlichen als mineralischer Füllstoff für die Papierindustrie hergestellt wird. Dieses Calciumcarbonat weist ein verbessertes rheologisches Verhalten auf, wodurch der Feststoffgehalt beim Streichen erhöht wird; es hat einen geringen Bindemittelbedarf und zeigt sich dadurch als äußerst wirtschaftlich, genügt aber ansonsten in bezug auf seine Eigenschaften bei der Anwendung in der Papierindustrie, insbesondere im Hinblick auf die erreichbare Papierqualität, nicht den derzeitigen Anforderungen.

In der DE-OS 36 17 169 werden carbonathaltige mineralische Füllstoffe, Pigmente und ähnliche Materialien behandelt und in bezug auf ihre wesentlichen anwendungstechnischen Eigenschaften, wie z.B. der Dispergierbarkeit, der Abrasion und der Gesamtretention verbessert. Diese Verbesserung trägt zur Erhöhung der Opazitätswerte bei Anwendung der Füllstoffe in Papiermassen sowie Papierstrichen bei, ist aber darüber hinaus eher unspezifisch für die Qualität des erhaltenen Endproduktes.

Aus der US 4 793 985 ist bereits ein Verfahren zur Herstellung von feinem Calciumcarbonat bekannt. Zu verweisen ist insbesondere auf die Ansprüche 1 und 6 sowie auf Spalte 2, Zeilen 38-57, Spalte 3, Zeilen 14-30 und 53-57, Spalte 4, Zeilen 11-59, Spalte 8, Zeilen 21-38 und Spalte 10, Zeilen 8-26 dieser Patentschrift. Nach dieser Patentschrift wird ein Slurry von 15 bis 60 Gew.% Feststoffgehalt hergestellt und mit einem organischen Dispersionsmittel dispergiert. In einem ersten Verfahrensschritt wird der dispergierte Slurry in eine Mühle eingespeist, und die Teilchen werden bis auf eine Feinheit von 50-70% < 2 $\mu$m vermahlen. In einem zweiten Verfahrensschritt wird das gemahlene Calciumcarbonat in einer Zentrifuge klassifiziert, wobei ein Produkt mit einer Feinheit von 70-99% an Partikeln < 2 $\mu$m erhalten wird und von einem Nebenprodukt mit gröberen Partikeln abgetrennt wird.

In "Southern Pulp Paper Mfr." 40, Nr. 7, Seiten 13-14 und 16-17 vom Juli 1977 wird der Effekt der Partikelgröße und der Korngrößenverteilung von Kaolin auf die Eigenschaften von beschichteten Papieren untersucht. Diese Veröffentlichung enthält aber nicht die speziellen Kornverteilungen, wie sie im folgenden offenbart werden.

Es besteht jedoch insbesondere in der Papierindustrie ein steigender Bedarf an hochwertigen Füllstoffen, deren optimierte Eigenschaften in bezug auf die Papier- und Kartonbeschichtung zu einer weiteren Verbesserung der erreichbaren Papierqualität beitragen.

Dementsprechend liegt der Erfindung die Aufgabe zugrunde, ein einfaches und effizientes Verfahren für die Herstellung wässriger Suspensionen von Füllstoffen und/oder Pigmenten, insbesondere hochwertiger Pigmentsuspensionen und/oder Pigmente für die Papierindustrie anzugeben.

Erfindungsgemäß wird diese Aufgabe durch das im Patentanspruch 1 gekennzeichnete Verfahren gelöst. Bevorzugte Merkmale sind den jeweils nachgeordneten Patentansprüchen zu entnehmen.

Das erfindungsgemäße Verfahren zur Herstellung von wäßrigen Suspensionen von Füllstoffen und/oder Pigmenten mit bestimmten Korngrößenverteilungen, insbesondere zur Herstellung von Pigment-Suspensionen für die Papierindustrie besteht aus folgenden Verfahrensschritten:

es wird eine wäßrige AusgangssuspensiOn von Füllstoffen und/oder Pigmenten mit einer Ausgangskornverteilung, die durch Naßvermahlung eines Aufgabenmaterials unter Zugabe eines Dispergiermittels hergestellt wurde, bereitgestellt; die Ausgangssuspension wird einer Schwerkraftsichtung mit einer Durchlaufzentrifuge unterworfen; und nach wenigstens einer Schwerkraftsichtung, die einer festgelegten mittleren Verweilzeit entspricht, wird wenigstens eine Trennsuspension von Füllstoffen und/oder Pigmenten mit einer zugehörigen Korngrößenverteilung entnommen,
wobei diese festgelegte mittlere Verweilzeit im kontinuierlichen Betrieb in etwa der Durchlaufzeit entspricht, welche das eingespeiste verdünnte Produkt in der Zentrifuge verbringt und im diskontinuierlichen Betrieb in etwa der Zeit entspricht, über welche die Nenndrehzahl der Zentrifuge beim Zentrifugieren erreicht wird, wobei sowohl die entnommenen Trennsuspensionen als auch die verbleibenden Suspensionen die Endprodukte des Verfahrens sind.

Die Vorrichtung zur Herstellung von wäßrigen Suspensionen von Füllstoffen und/oder Pigmenten ist gekennzeichnet durch eine Durchlaufzentrifuge, welche mit einer Zuführvorrichtung für die Zuführung von wäßrigen Suspensionen und mindestens einer Entnahmevorrichtung für die Entnahme von wäßrigen Suspensionen versehen ist.

Überraschenderweise ergeben sich durch diese einfache Verfahrensführung bereits deutliche Verbesserungen in bezug auf die wesentlichen, für die Papierbeschichtung wichtigen Eigenschaften. Der Weißgrad wird erhöht, es wird eine höhere Opazität, ein höherer Glanz und eine bessere Bedruckbarkeit erreicht. Es besteht die Vermutung, daß der Grund hierfür zum einen im Entfernen von Verunreinigungen und zum anderen im Entfernen ultrafeiner Teilchen, welche unter Umständen stark streuend wirken, besteht. Darüber hinaus wurde auch die Rheologie der in wäßriger Suspension befindlichen Pigmente, insbesondere im dispergierten Zustand, deutlich verbessert, welches daran liegen kann, daß niedermolekulare Dispergiermittel verfahrensgemäß entfernt werden.

Erfindungsgemäß wird eine wäßrige Ausgangssuspension von Füllstoffen und/oder Pigmenten mit einer Ausgangskornverteilung und mit z.B. 30 %-igem Feststoffgehalt aus einem Vorratsgefäß in eine geeignete Vorrichtung, insbesondere eine Durchlaufzentrifuge eingespeist. Die Ausgangssuspension wird dann einer Schwerkraftsichtung unterworfen. Danach wird wenigstens eine Trennsuspension von Füllstoffen und/oder Pigmenten mit einer zugehörigen Korngrößenverteilung entnommen.

Das erfindungsgemäße Verfahren kann grundsätzlich auf zweierlei Weise durchgeführt werden:

Entweder (z.B. im Labormaßstab) wird vorzugsweise eine Suspension entnommen, die z.B. ca. 10 % Feststoffgehalt aufweist. Der verbleibende Rest, der z.B. ca. 70 % Feststoffgehalt hat, kann absatzweise entnommen und direkt in der Papierindustrie verwendet werden. Aber auch die die Feinstanteile enthaltende Suspension mit ca. 10 % Feststoffgehalt muß nicht verworfen werden, sondern kann mit Vorteil - insbesondere nach Aufkonzentrierung und Trocknung - verwendet werden, besonders als Pigment für Druckfarben sowie in Industrie- und Malerlacken zur Einsparung von $TiO_2$.

Oder es kann (z.B. im Industriemaßstab) die für die Papierindustrie vorgesehene Suspension, die wie gesagt z.B. ca. 70 % Feststoffgehalt aufweisen kann, kontinuierlich abgezogen werden.

Insgesamt ergibt sich hieraus eine verbesserte Eignung der Pigmentsuspensionen und der Pigmente für die Papierindustrie, insbesondere bei der Verwendung für qualitativ hochwertigere Papiere sowohl für den Tiefdruck als auch für den Offsetdruck und die Kartonbeschichtung.

Dieses Verfahren kann prinzipiell auch als "Naßsichtungsverfahren" bezeichnet werden, und ist nicht auf die hierin beschriebenen Anwendungsfälle beschränkt. Das Grundprinzip beruht darauf, daß eine normalerweise für die Trennung von Fest-/Flüssig-Gemischen verwendete Zentrifuge, welche auf herkömmliche Weise eine Trennung in Flüssigkeit und Feststoffe vornimmt, erfindungsgemäß zur Trennung von Fest-/Flüssig-Gemischen verwendet wird, bei welchem ein Fest-/Flüssig-Gemisch eingespeist und ebenfalls mindestens ein Fest-/Flüssig-Gemisch, vorzugsweise mehrere Fest-/Flüssig-Gemische, abgenommen werden, welche voneinander verschiedene Fest-/Flüssig-Anteile aufweisen.

Ein weiterer gravierender Vorteil besteht darin, daß bei dem Verfahren keinerlei Abfallprodukte entstehen, da sämtliche verfahrensgemäß hergestellten Fest-/Flüssig-Gemische, die nach einer bevorzugten weiteren Ausführung des Verfahrens nach erneuter Verdünnung der verbleibenden Suspension unter Zugabe von Wasser, abgenommen werden, weiterverwendet werden können. Es wird für das Schwerkraft- bzw. Naßsichten eine Durchlaufzentrifuge eingesetzt.

Die geeignete Ausgangskornverteilung der Füllstoffe und/oder Pigmente ergibt sich, wenn diese durch Naßvermahlung eines Aufgabematerials, vorzugsweise in einer Rührwerkskugelmühle unter Zusatz eines Dispergiermittels, gewonnen werden. Hierbei ist in der Regel bereits die Ausgangskornverteilung, welche in Beispielen nachfolgend näher beschrieben wird, für die Verwendung bei der Papier- und Kartonbeschichtung gut geeignet und erfährt eine weitere Verbesserung ihrer Eigenschaften in der vorbeschriebenen erfindungsgemäßen Weise.

Mineralische Füllstoffe bilden kostengünstige Aufgabematerialien für die Herstellung der Ausgangskornverteilung, hierfür hat sich unter anderem natürliches Calciumcarbonat als gut geeignet erwiesen.

Gute Dispergierbarkeit der Pigmente in wäßrigen Suspensionen ergibt sich, wenn bereits beim Naßvermahlen als Dispergiermittel das Salz einer Polyacrylsäure zugesetzt wird.

Versuchsreihen ergaben, daß sich eine Verdünnung der Ausgangskornverteilung sowohl im dispergierten wie auch im nicht dispergierten Zustand auf einen Feststoffgehalt von 20 - 40 Gew.-%, vorzugsweise 30 Gew.-% gut eignet, um auch unter wirtschaftlichen Bedingungen, d.h. mit einem geeigneten Durchsatz, das Verfahren durchführen zu können.

Die Vorrichtung für das erfindungsgemäße Verfahren weist eine Durchlaufzentrifuge auf, welche mit einer Zuführvorrichtung für die Zuführung von wäßrigen Suspensionen und mindestens einer Entnahmevorrichtung für die Entnahme von wäßrigen Suspensionen versehen ist. Diese Vorrichtung ist in der Lage, sowohl im kontinuierlichen Betrieb als auch diskontinuierlich, d.h. mit jeweiliger Einzelbeschickung, die erwünschte Kornverteilung zu erzeugen. Elektronische Steuereinrichtungen für den kontinuierlichen und/oder diskontinuierlichen Betrieb der Durchlaufzentrifuge und der Zuführ- und Entnahmevorrichtung erlauben den Einsatz in der Massenproduktion sowie die Sicherung der Verfahrensparameter.

Wie bereits vorstehend beschrieben, kann die mit dem erfindungsgemäßen Verfahren erhaltene wäßrige Suspension direkt in der Papierindustrie verwendet werden. Diese Suspension kann jedoch auch getrocknet werden, worauf die hierdurch erhaltenen Pigmente als solche verwendet werden.

Das Pigment hat vorzugsweise eine Kornverteilungskurve mit einem Teilchenanteil von

< 5 µm = 100 %
< 1 µm = 35 - 65 %
< 0,5 µm = 10 - 30 %
< 0,3 µm = 1 - 20 %
< 0,2 µm = 0 - 8 %

und eine spezifische Oberfläche (BET$_{N2}$) = 5 - 10 m$^2$/g.

Weiterhin konnten sehr gute Pigmente gewonnen werden mit einer Kornverteilungskurve mit einem Teilchenanteil von

< 5 µm = 100 %
< 1 µm = 40 - 55 %
< 0,5 µm = 10 - 25 %
< 0,3 µm = 1 - 8 %
< 0,2 µm = 0 - 5 %

und einer spez. Oberfläche (BET$_{N2}$) = 6 - 8 m$^2$/g.

Darüber hinaus konnte in einem insbesondere bevorzugten erfindungsgemäßen Ausführungsbeispiel ein Pigment mit einer Kornverteilungskurve mit einem Teilchenanteil von

< 5 µm = 100 %
< 1 µm = 40 - 45 %
< 0,5 µm = 10 - 15 %
< 0,3 µm = 0 - 6 %
< 0,2 µm = 0 %

und einer spez. Oberfläche (BET$_{N2}$) = 6 - 7 m$^2$/g hergestellt werden.

Das abkürzend als Pigment bezeichnete Gemisch von Pigmentteilchen verschiedener Korngröße weist in allen vorstehend beschriebenen Ausführungsformen die bereits erläuterten Vorteile auf und ist darüber hinaus gut dispergierbar.

Ein geeignetes Dispergiermittel besteht aus einem Natriumpolyacrylat, welches eine spezifische Viskosität ε von 0,15 - 1,0 entsprechend einem $M_w$ von ca. 1000 - ca. 15000 aufweist.

Diese auf das Pigment abgestimmte spezifische Viskosität weist einen besonders gut geeigneten Bereich um Viskositätswerte des Dispergiermittels mit einem ε von 0,35 entsprechend einem $M_w$ von ca. 3000 herum auf.

Die Messung der spezifischen Viskosität ε wurde wie folgt durchgeführt. Die Suspension des Polymers/Copolymers wird zur Messung 100 % mit Natronlauge (pH 9) neutralisiert, indem man 50 g, bezogen auf trockenes Polymer/Copolymer, in einem Liter, 60 g NaCl-enthaltendem, destilliertem Wasser auflöst. Danach mißt man mit einem Kapillarviskosimeter mit einer Baume-Konstante von 0,000105 in einem auf 25° C thermostabilisierten Heizbad die Zeit, die ein genau definiertes Volumen der alkalischen Polymer/Copolymer-Suspension zum Durchströmen der Kapillare braucht und vergleicht mit der Zeit, die dasselbe Volumen der Blindlösung mit 60 g NaCl/l zum Durchströmen der Kapillare braucht. Es ist somit möglich, die spezifische Viskosität ε wie folgt zu definieren.

$$\varepsilon = \frac{t_{DP} - t_{DS}}{t_{DS}}$$

worin $t_{DP}$ die Zeit des Durchströmens der Polymerlösung und $t_{DS}$ die Zeit des Durchströmens der NaCl-Suspension bedeutet.

Die besten Resultate werden erreicht, wenn der Kapillardurchmesser so gewählt wird, daß die Zeit, welche die Polymer/Copolymer-enthaltende NaCl-Suspension benötigt, zwischen 90 und 100 Sekunden beträgt.

Geeignete Dispergiermittel sind weiterhin:

N,N,N - Trimethylammoniumpropyl-acrylamid Polymere, N,N,N - Trimethylammoniumaethyl-acrylsäureester Polymere und/oder Copolymere mit Acrylsäure und/oder Methacrylsäure und/oder Acrylamid alleine oder in Kombination mit: Polyacrylsäure und/oder Polymethacrylsäure und/oder deren Salze.

Die Polyacrylsäure und/oder Polymethacrylsäure ist vorzugsweise teilneutralisiert.

Die Grenzviskosität der obigen kationischen Polyelektrolyte liegt vorzugsweise im Bereich von 15 ml/g bis 100 ml/g, besser bei 25 ml/g bis 80 ml/g idealerweise bei 65 ml/g.

Die spezifische Viskosität der obigen anionischen Polyelektrolyte liegt vorzugsweise im Bereich von 0,15 bis 1,0, besser bei 0,3 bis 0,8, idealerweise bei 0,5.

Falls die stickstoffhaltigen Polyelektrolyte als Alleindispergiermittel eingesetzt werden, sind sie vorzugsweise mit 47 mol% bis 70 mol%, besser mit 48 mol% bis 60 mol%, idealerweise mit 50 mol% Acrylsäure und/oder Methacrylsäure copolymerisiert.

Alle in der vorliegenden Patentanmeldung genannten Feinheitsmerkmale der erfindungsgemäß hergestellten Produkte wurden durch Sedimentationanalyse im Schwerefeld mit dem SEDIGRAPH 5000 der Fa. Micrometrics, USA, bestimmt. Dieses Gerät ist dem Durchschnittsfachmann bekannt und wird weltweit zur Bestimmung der Feinheit von Füllstoffen und Pigmenten verwendet. Die Messung erfolgte in einer 0,1 Gew.-% wäßrigen $Na_4P_2O_7$-Suspension. Die Dispergierung der Proben wurde mittels Schnellrührer und Ultraschall vorgenommen.

Die gemessene Teilchenverteilung wird auf einem XY-Schreiber als Durchgangs-Summenkurve dargestellt (siehe z.B. Belger, P., Schweizerische Vereinigung der Lack- und Farben-Chemiker, XVII. FATIPECK-Kongress, Lugano, 23. - 28. September 1984), wobei auf der X-Achse der Teilchendurchmesser eines entsprechenden sphärischen Durchmessers und auf der Y-Achse der Anteil an Teilchen in Gew.-% aufgetragen wird.

Die Glanzmessung erfolgt nach TAPPI im 75°-Einstrahl- und Abstrahlwinkel auf der Vollfläche.

Die Messung der spezifischen Oberfläche erfolgte nach BET entsprechend DIN 66132. Die bis zur Gewichtskonstanz bei 105°C vorgetrocknete Probe wurde im Thermostaten bei 250°C unter Stickstoffspülung während 1 Stunde ausgeheizt. Die Messung erfolgte mit Stickstoff ($N_2$) als Meßgas unter Kühlung mit flüssigem Stickstoff.

Die spezifische Oberfläche nach BET in $m^2/g$ ist wichtig für die Erzielung maximaler Füllgrade und die besten rheologischen Eigenschaften.

Nachstehend wird die Erfindung anhand der beigefügten Zeichnungen im einzelnen beschrieben.

Es zeigen :

Figur 1    Kornverteilungskurven, der Ausgangskornverteilung, der verfahrensgemäßen Kornverteilung sowie die Kornverteilung des entfernten verdünnten Produktes,

Figur 2    eine perspektivische Ansicht einer Vorrichtung zur Herstellung von Pigmentsuspensionen von vorn,

Figur 3    eine perspektivische Ansicht eines Oberteils des Rotors der in Figur 2 dargestellten Vorrichtung.

Nachfolgend wird das Verfahren beschrieben.

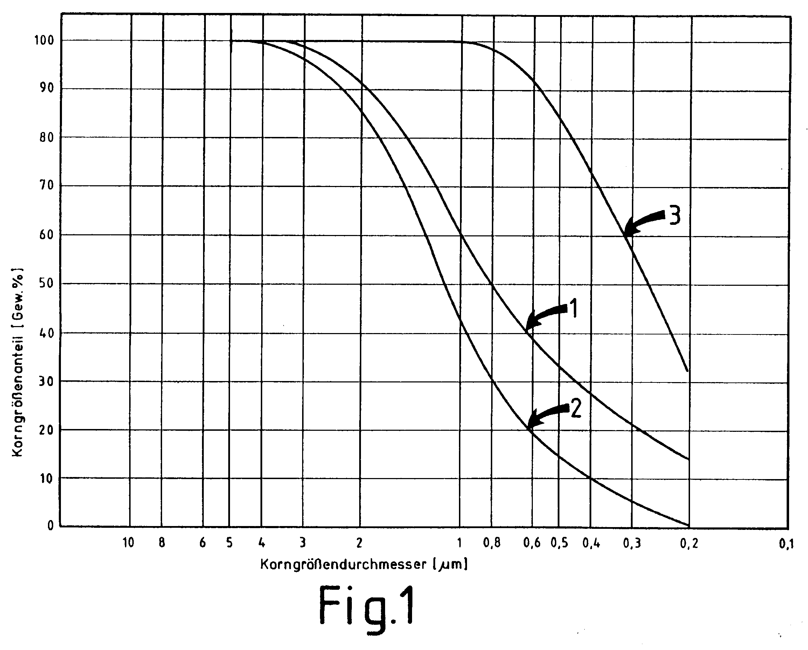

Durch Naßvermahlen von als Aufgabematerialien dienenden Füllstoffen, welche z.B. aus natürlichem Calciumcarbonat bestehen können, wird ein Gemisch von Pigmenten gewonnen, welches beispielhaft die in Fig. 1 mit "1" bezeichnete Kornverteilungskurve aufweist. Diese Kornverteilung wurde durch Naßvermahlung in einer Rührwerkskugelmühle unter Zusatz eines Dispergiermittels gewonnen.

Als Dispergiermittel wurde das Salz einer Polyacrylsäure zugesetzt.

Beliebige Substanzen mit alternativen Ausgangskornverteilungen und verschiedenen Dispergiermitteln sind verwendbar, so daß das Verfahren weder durch die Substanz, die Ausgangskornverteilung noch durch das verwendete Dispergiermittel beschränkt ist.

Die derart gewonnene Ausgangskornverteilung wird vorzugsweise mit Wasser verdünnt; bei dem vorliegenden Ausführungsbeispiel wird die Verdünnung bis zu einem Feststoffgehalt von 20 - 40 Gew.-%, vorzugsweise 30 Gew.-%, vorgenommen.

Das verdünnte Produkt wird in eine Durchlaufzentrifuge eingespeist und für eine festgelegte mittlere Verweilzeit in der Durchlaufzentrifuge zentrifugiert.

Im kontinuierlichen Betrieb entspricht die mittlere Verweilzeit in etwa der Durchlaufzeit, welche das eingespeiste verdünnte Produkt in der Zentrifuge verbringt. Im diskontinuierlichen Betrieb, d.h. bei periodischer Beschickung der Zentrifuge, entspricht die mittlere Verweilzeit in etwa der Zeit, über welche die Nenndrehzahl der Zentrifuge beim Zentrifugieren erreicht wird.

Nach Ablauf der festgelegten mittleren Verweilzeit wird ein erster teilseparierter Anteil des verdünnten Produktes entfernt.

Der Anteil des entnommenen verdünnten Produktes entspricht im vorliegenden Ausführungsbeispiel der mit "3" bezeichneten Kornverteilungskurve in Fig. 1.

Hierbei ist verfahrensgemäß eine teilchengrößenabhängige teilweise Separation der jeweiligen Korngrößenanteile durchgeführt worden.

Die durch das Zentrifugieren entfernten niedermolekularen Dispersionsmittel des ersten Anteils haben einen Wert $M_W$ von ca. < 2000, der einer spezifischen Viskosität mit einem $\varepsilon$ von ca. 0,2 entspricht.

Der in der Zentrifuge verbleibende oder der Zentrifuge getrennt vom ersten teilseparierten Anteil entnommene zweite Anteil enthält die Pigmente der verfahrensgemäßen Kornverteilung in wäßriger Suspension. Er kann, falls erwünscht, ebenfalls unter Zugabe von Wasser erneut verdünnt werden.

Bei dem vorliegenden Ausführungsbeispiel wurde die Durchlaufzentrifuge mit einer Durchflußrate von ca. 300 ml/min. beschickt und die festgelegte mittlere Verweilzeit betrug ca. 1 Minute. Die Drehfrequenz der Durchlaufzentrifuge wurde auf etwa 4000 Umdrehungen/min. konstant gehalten, dabei wurde in der Durchlaufzentrifuge eine Zentrifugalkraft von ca. 1300 g, also etwa dem 1300-fachen der Erdbeschleunigung erzeugt.

Mit anderen Umdrehungszahlen wurden ebenfalls gute Ergebnisse erzielt, hierbei wurden die zeitlichen Durchlaufmengen jedoch entsprechend jeweils nach oben oder nach unten verändert.

Das Verfahren wurde mit der nachstehend beschriebenen Vorrichtung durchgeführt.

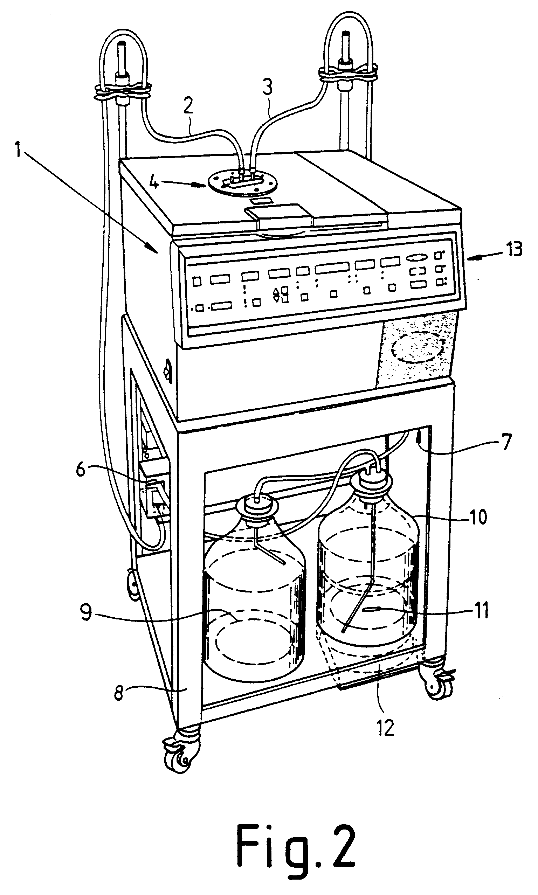

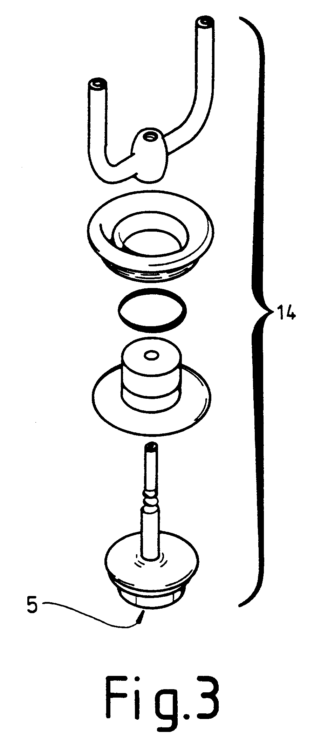

Die Vorrichtung (Fig. 2 und 3) enthält eine Durchlaufzentrifuge 1, welche mit einer Zuführvorrichtung 2 für die Zuführung von wäßrigen Suspensionen und mindestens einer Entnahmevorrichtung 3 für die Entnahme von wäßrigen Suspensionen versehen ist. Durch die Zuführvorrichtung 2 ist das verdünnte Produkt der Rotationskammer 4 (in Fig. 2 nicht sichtbar) der Durchlaufzentrifuge 1 zuführbar und durch die Entnahmevorrichtung 3 sind der erste teilseparierte Anteil des verdünnten Produktes und in weiterer Ausgestaltung der Erfindung auch das verdünnte Produkt mit den Pigmenten der verfahrensgemäßen Kornverteilung in wäßriger Suspension der Zentrifuge 1 entnehmbar.

Die Entnahmevorrichtung 3 weist hierbei eine Absaugöffnung 5 mit einem festgelegten Querschnitt auf, welche in festgelegtem Abstand zur Rotationsachse der Rotationskammer 4 der Durchlaufzentrifuge 1 angebracht ist.

Wie in Figur 3 dargestellt, ist die Absaugöffnung 5 an der Unterseite eines in dem Deckel der Rotationskammer 4 gehaltenen Oberteils 14 des Rotors angeordnet. Zusätzlich ist optional in der Nähe der Absaugöffnung 5 eine Leitschaufel zur Unterstützung der Förderung der wäßrigen Suspension angebracht.

Es werden sowohl in der Zuführvorrichtung 2 als auch in der Entnahmevorrichtung 3 jeweils wenigstens eine Schlauchpumpe 6, 7, die im vorliegenden Ausführungsbeispiel eine Schlauchquetschpumpe ist, eingesetzt, um die in wäßriger Suspension vorliegenden Pigmente zu transportieren. Die in Figur 2 an verdeckter Stelle angeordnete und somit nicht sichtbare Schlauchpumpe 7 ist in der gleichen Weise wie die Schlauchpumpe 6 an dem Gestell 8 der Durchlaufzentrifuge 1 befestigt.

Über die Schlauchpumpe 6, 7 kommuniziert die Zuführvorrichtung 2 und die Entnahmevorrichtung 3 jeweils mit einem Gefäß 10 für die Aufbewahrung und/oder Bevorratung von Füllstoffen und/oder Pigmenten mit einer Ausgangskornverteilung in wäßriger Suspension und mit einem Gefäß 9 für die Aufbewahrung von Pigmenten in wäßriger Suspension.

Unter dem Gefäß 10 ist ein Magnetrührer 12 an dem Gestell gehalten, welcher mit einem sich bewegenden Magnetfeld auf den optional in dem Gefäß 10 angeordneten Rührmagneten 11 zur Durchmischung des Inhalts des Gefäßes 10 einwirkt.

In weiterer Ausgestaltung ist die Vorrichtung mit einer elektronischen Steuereinrichtung 13 für den kontinuierlichen automatischen und/oder diskontinuierlichen, vorzugsweise manuellen, Betrieb der Durchlaufzentrifuge 1 und der Zuführ- und Entnahmevorrichtungen 2, 3 ausgestattet.

Das durch das beschriebene Verfahren in der Vorrichtung erhaltene Pigment weist eine Kornverteilungskurve mit einem Teilchenanteil von

< 5 µm = 100 %
< 1 µm = 35 - 65 %
< 0,5 µm = 10 - 30 %
< 0,3 µm = 1 - 20 %
< 0,2 µm = 0 - 8 %

und eine spezifische Oberfläche ($BET_{N2}$) = 5 - 10 m$^2$/g auf.

In einem weiteren Ausführungsbeispiel konnte durch eine Änderung der Füllstoffe und/oder Pigmente mit Ausgangskornverteilung oder durch eine Änderung der Verfahrensparameter bei der Durchführung des Verfahrens ein Pigment mit einer Kornverteilungskurvemit einem Teilchenanteil von

< 5 µm = 100 %
< 1 µm = 40 - 55 %
< 0,5 µm = 10 - 25 %
< 0,3 µm = 1 - 8 %
< 0,2 µm = 0 - 5 %

und eine spezifische Oberfläche ($BET_{N2}$) = 6 - 8 m$^2$/g hergestellt werden.

Bei einer Kornverteilungskurve des Ausgangsmaterials, die der in Fig. 1 mit "1" bezeichneten Kurve sehr ähnlich war, konnte ein Pigment mit einer Kornverteilungskurve mit einem Teilchenanteil von

< 5 µm = 100 %

< 1 µm = 40 - 45 %

< 0,5 µm = 10 - 15 %

< 0,3 µm = 0 - 6 %

< 0,2 µm = 0 %

und einer spez. Oberfläche $(BET_{N2})$ = 6 - 7 $m^2$/g erhalten werden.

Diese Pigmente wurden aus der Pigmentsuspension, in welcher sie zunächst nach Durchführung des Verfahrens vorliegen, durch an sich bekannte Trocknungs- oder Konzentrationsverfahren erhalten.

Soweit die Pigmente in wäßriger Suspension vorlagen, wurde als Dispergiermittel vorzugsweise ein Natriumpolyacrylat verwendet, elches eine spezifische Viskosität ε von 0,15 - 1,0 entsprechend einem $M_W$ von 1000 - 15000 aufweist. Im vorliegenden Ausführungsbeispiel wurde das Natriumpolyacrylat mit einer spezifischen Viskosität von 0,35 entsprechend einem $M_W$ von ca. 3000 verwendet.

In einem Tiefdruckversuch wurde das Ausgangsprodukt in bezug auf seine Eigenschaften bei der Papierherstellung mit dem verfahrensgemäß gewonnenen Pigment verglichen. Das Ausgangsprodukt wies die in Figur 1 mit "1" bezeichnete Kornverteilungskurve und das verfahrensgemäße Endprodukt-Pigment die mit "2" bezeichnete Kornverteilungskurve auf.

Tabelle 1

| | | | Ausgangsprodukt | Endprodukt |
|---|---|---|---|---|
| Feststoffgehalt | | Gew.% | 61,9 | 61,9 |
| Viskosität | 20 UpM | mPas | 4'000 | 1'730 |
| | 100 UpM | mPas | 1'240 | 655 |
| Glanz-Labor 75°-75° | | % | 40 | 46 |
| Weisse R 457 | | % | 76,2 | 78,4 |
| Opazität | | % | 81,8 | 83,2 |
| Glätte (Bekk) | | sec | 1'720 | 2'385 |
| Rauhigkeit (PPS) | | µm | 2,1 | 1,7 |
| Heliotest | | mm | 36 | 52 |
| 20 miss. dots, 40 kp | | | | |

Bei gleichem Feststoffgehalt zeigt das verfahrensgemäß gewonnene Pigment eine verbesserte Viskosität, höhere Glanz-, Weiß-, und Opazitäts-Werte. Die Werte der Glätte sowie der Rauhigkeit zeigen die Verbesserung der Eigenschaften in bezug auf die Handhabung des mit dem verfahrensgemäßen Pigment beschichteten Papiers. Der Heliotest weist die deutlich verbesserte Bedruckbarkeit mit dem verfahrensgemäßen Pigment nach.

Diese Eigenschaften belegen die Eignung des Pigmentes für den Einsatz in der Papierindustrie.

Als geeignete Anwendungen des vorzugsweise in Suspension vorliegenden Pigmentes erweisen sich unter anderem der Einsatz in der Leimpresse der Papiermaschine bei der Beschichtung von Papier und Karton, im Papier-Vorstrich oder nach einem oder mehreren Vorstrichen im Deckstrich von Papier und Karton. Darüberhinaus ist das Pigment prinzipiell auch für bereits bekannte Anwendungen von Füllstoffen verwendbar.

Die durch Zentrifugieren entfernten Feinstanteile stellen kein Produkt dar, das entsorgt werden muß, sondern mit Vorteil - nach Aufkonzentrierung und Trocknung - besonders als Pigment für Druckfarben sowie in Industrie- und Malerlacken zur Einsparung von $TiO_2$ eingesetzt werden kann.

**Patentansprüche**

1.  Verfahren zur Herstellung von wäßrigen Suspensionen von Füllstoffen und/oder Pigmenten mit bestimmten Korngrößenverteilungen, insbesondere zur Herstellung von Pigmentsuspensionen für die Papierindustrie, bestehend aus folgenden Verfahrensschritten:

    Es wird eine wäßrige Ausgangssuspension von Füllstoffen und/oder Pigmenten mit einer Ausgangskornverteilung, die durch Naßvermahlung eines Aufgabenmaterials unter Zusatz eines Dispergiermittels hergestellt wurde, bereitgestellt, diese Ausgangssuspension wird einer Schwerkraftsichtung mit einer Durchlaufzentrifuge unterworfen und

nach wenigstens einer Schwerkraftsichtung, die einer festgelegten mittleren Verweilzeit entspricht, wenigstens eine Trennsuspension von Füllstoffen und/oder Pigmenten mit einer zugehörigen Korngrößenverteilung entnommen wird, wobei diese festgelegte mittlere Verweilzeit im kontinuierlichen Betrieb in etwa der Durchlaufzeit entspricht, welche das eingespeiste verdünnte Produkt in der Zentrifuge verbringt und im diskontinuierlichen Betrieb in etwa der Zeit entspricht, über welche die Nenndrehzahl der Zentrifuge beim Zentrifugieren erreicht wird, wobei sowohl die entnommenen Trennsuspensionen als auch die verbleibenden Suspensionen die Endprodukte des Verfahrens sind.

2. Verfahren nach Anspruch 1,
dadurch gekennzeichnet,

daß nach Entnahme der ersten Trennsuspension die verbleibende Suspension unter Zugabe von Wasser verdünnt und ebenfalls nach wenigstens einer Schwerkraftsichtung wenigstens eine weitere Trennsuspension mit zugehöriger Korngrößenverteilung entnommen wird.

3. Verfahren nach einem der vorhergehenden Ansprüche,
dadurch gekennzeichnet,

daß die Ausgangskornverteilung der Füllstoffe und/oder Pigmente durch Naßvermahlung eines Aufgabematerials in einer Rührwerkskugelmühle hergestellt wird.

4. Verfahren nach einem der vorhergehenden Ansprüche,
dadurch gekennzeichnet,

daß für die Füllstoffe und/oder Pigmente mit ihrer Ausgangskornverteilung mineralische Füllstoffe insbesondere natürliches oder präzipitiertes Calziumcarbonat verwendet werden.

5. Verfahren nach einem der Ansprüche 3 oder 4,
dadurch gekennzeichnet,

daß beim Naßvermahlen als Dispergiermittel das Salz einer Polyacrylsäure zugesetzt wird.

6. Verfahren nach einem der vorhergehenen Ansprüche,
dadurch gekennzeichnet,

daß die Füllstoffe und/oder Pigmente mit ihrer Ausgangskornverteilung vor dem Einspeisen in die Zentrifuge auf einen Feststoffgehalt von von 20 - 40 Gew.%, vorzugsweise 30 Gew.-%, verdünnt werden.

7. Verwendung von Pigmenten oder von Füllstoffen- bzw. Pigmentsuspensionen, hergestellt aus den verbleibenden Suspensionen gemäß dem Verfahren nach einem der Ansprüche 1 bis 6 in der Papierindustrie, vorzugsweise in der Papiererzeugung und/oder in der Leimpresse der Papiermaschine und/oder zur Beschichtung von Papier und Karton und/oder im Papier-Vorstrich und/oder nach einem oder mehreren Vorstrichen als Deckstrich von Papier und Karton.

**Claims**

1. Process for the preparation of aqueous suspensions of fillers and/or pigments having specific grain size distributions, particularly for the preparation of pigment suspensions for the papermaking industry comprises the following process steps of:

An aqueous starting suspension of fillers and/or pigments having a starting grain size distribution prepared by wet grinding of a feed material and adding a dispersant is provided, this starting suspension is subjected to a gravity separation using a continuous flow centrifuge; and
after at least one gravity separation corresponding to a predetermined average residence time at least one separated suspension of fillers and/or pigments having a corresponding grain size distribution is removed; wherein said predetermined average residence time in continuous operation approximately corresponds to the flow time which the diluted product feed spends in the centrifuge, and in discontinuous operation approximately

8

corresponds to the time it takes to achieve the nominal speed of the centrifuge during centrifugation, and wherein both the removed separated suspensions and the residual suspensions are final products of the process.

2. Process according to claim 1 wherein after removal of the first separated suspension the remaining suspension is diluted by addition of water, and wherein after at least one gravity separation at least another separated suspension having a corresponding grain size distribution is removed.

3. Process according to any of the preceding claims wherein the starting grain size distribution of the fillers and/or pigments is prepared by wet grinding of a feed material in an agitator-ball mill.

4. Process according to any of the preceding claims wherein mineral fillers, particularly natural or precipitated calcium carbonate, are used for the fillers and/or pigments having their starting grain size distribution.

5. Process according to any of claims 3 or 4 wherein the salt of a polyacrylic acid is added as a dispersant during wet grinding.

6. Process according to any of the preceding claims wherein the fillers and/or pigments having their starting grains size distribution are diluted prior to feeding into the centrifuge to a solids content of 20-40% by wt., preferably 30% by wt.

7. Use of pigments or of filler or pigment suspensions, respectively, prepared from the residual suspensions according to the process of any of the claims 1 to 6 in the papermaking industry, preferably in papermaking and/or in the size press of the papermaking machine and/or for coating of paper and board and/or in the paper precoat, and/or following one or more precoats as the finishing coat of paper and board.

**Revendications**

1. Procédé pour la préparation de suspensions aqueuses de charges et/ou pigments à distributions granulométriques déterminées, en particulier pour la préparation de suspensions de pigments pour l'industrie papetière, consistant en les étapes de processus suivantes:

on prépare une suspension aqueuse initiale de charges et/ou pigments ayant une distribution granulométrique initiale, qui a été préparée par broyage par voie humide d'un matériau introduit, avec addition d'un dispersant, on soumet cette suspension initiale à une élutriation gravimétrique au moyen d'une centrifugeuse à débit continu ; et
après au moins une élutriation gravimétrique, qui correspond à un temps de séjour moyen déterminé, on prélève au moins une suspension séparée de charges et/ou pigments ayant une distribution granulométrique correspondante, ce temps de séjour moyen déterminé correspondant, dans le fonctionnement en continu, approximativement au temps de passage du produit dilué introduit dans la centrifugeuse, et, dans le fonctionnement discontinu, correspondant approximativement au temps pendant lequel le nombre de tours nominal de la centrifugeuse est atteint lors de la centrifugation, aussi bien les suspensions séparées déversées que les suspensions restantes étant les produits finals du procédé.

2. Procédé selon la revendication 1, caractérisé en ce que, après déversement de la première suspension séparée, la suspension restante est diluée par addition d'eau, et, également après au moins une élutriation gravimétrique, au moins une autre suspension séparée à distribution granulométrique appropriée est déversée.

3. Procédé selon l'une quelconque des revendications précédentes, caractérisé en ce que la distribution granulométrique initiale des charges et/ou pigments est obtenue par broyage par voie humide d'un matériau de départ, dans un broyeur à boulets muni d'un agitateur.

4. Procédé selon l'une des revendications précédentes, caractérisé en ce que, pour les charges et/ou pigments avec leur distribution granulométrique initiale, on utilise des charges minérales, en particulier du carbonate de calcium naturel ou précipité.

5. Procédé selon la revendication 3 ou 4, caractérisé en ce que, lors du broyage par voie humide, on ajoute comme dispersant le sel d'un poly(acide acrylique).

**6.** Procédé selon l'une quelconque des revendications précédentes, caractérisé en ce que les charges et/ou pigments, avec leur distribution granulométrique initiale, sont dilués, avant l'introduction dans la centrifugeuse, jusqu'à une teneur en matière sèche de 20-40 % en poids, de préférence de 30 % en poids.

**7.** Utilisation de pigments ou de suspensions de charges ou de pigments, préparés à partir des suspensions restantes conformément au procédé selon l'une des revendications 1 à 6, dans l'industrie papetière, de préférence dans la fabrication du papier et/ou dans la presse encolleuse de la machine à papier, et/ou pour le couchage du papier et du carton et/ou dans le précouchage du carton et/ou après un ou plusieurs précouchages, en tant que couchage final du papier et du carton.

Fig.1

Fig.2

Fig.3